# EUROPÄISCHE PATENTSCHRIFT

(11) **EP 1 255 146 B1**
(45) Veröffentlichungstag und Bekanntmachung des Hinweises auf die Patenterteilung: **02.01.2008**
(21) Anmeldenummer: 02100126.8
(22) Anmeldetag: 12.02.2002
(51) Int. Cl.: G02B 21/22, G02B 21/24, G06T 7/20, H04N 5/232

(54) **Verfahren und Vorrichtung zum automatischen fokussieren eines optischen Gerätes**
Autofocus method and apparatus for an optical device
Méthode et dispositif autofocus pour instrument optique

(30) Priorität: 14.02.2001 DE 10106698
(43) Veröffentlichungstag der Anmeldung: 06.11.2002
(73) Patentinhaber: Leica Microsystems (Schweiz) AG, 9435 Heerbrugg (CH)
(72) Erfinder: Spink, Roger, 9442, Berneck (CH)
(74) Vertreter: Rosenich, Paul

(56) Entgegenhaltungen:
- EP-A- 0 366 136
- US-A- 5 647 025
- US-A- 5 867 308

## Beschreibung

Die Erfindung betrifft ein Verfahren und eine Vorrichtung zum automatischen Fokussieren eines (Stereo-) Operationsmikroskopes, mit dem ein Fokussieren auf jene Objektebene möglich ist, in welcher der Anwender die größte Sehschärfe benötigt. Ein (Stereo-) Operationsmikroskope ist aus US-A-5 867 308 bekannt. Bei vielen klinischen Applikationen wird nur in einem kleinen Bereich des Sichtfeldes gearbeitet. Die Fokussierung soll also auf diesen Bereich vorgenommen werden.

Der Erfindung gehen dabei die Erkenntnisse voraus, dass
- der Betrachter gerade dort, wo beispielsweise mit einem Instrument gearbeitet wird, die größte Schärfe wünscht
und
- sich der Bildinhalt in diesem kleinen Umfeld, in welchem gearbeitet wird, infolge Bewegung des Instruments am stärksten verändert.

Neben der manuellen Einstellung der Fokusebene einer optischen Einrichtung gibt es zahlreiche automatische Systeme, die auf Grund eines Mess-Signals - erzeugt im Wesentlichen auf Grund einer Messung der Distanz zum Objekt - die Einstellung vornehmen.

Liegen die Koordinatenachsen X und Y in der Objektebene und verläuft die Z-Koordinatenachse parallel zur optischen Achse, müssen zur Ermittlung einer Distanz z1 vom optischen System zu einem Punkt in der Objektebene die X-, Y-Koordinaten definiert werden:
- In einfachen Systemen werden diese Koordinaten mit x0=y0=0 festgelegt.
- In aufwändigeren Systemen werden die zu definierenden Koordinaten (x0,y0) mittels eines Joysticks festgelegt.
- Komplexe Systeme können beispielsweise über "Eye tracking" die Koordinaten (x0,y0) eines vom Beobachterauge betrachteten Punktes ermitteln und mittels des Messsystems den Abstand dieses Punktes zum Objektiv ermitteln.
- Eine Anpassung der z0-Koordinate auf Grund der Veränderung der Helligkeit der Bildstrahlen bei Änderung der Scharfeinstellung ist aus der DE-A-1 928 432 bekannt.
- Des Weiteren geht aus der DE-A-2 053 017 die Kompensation eines Spaltbildes durch einen verstellbaren Spiegel und aus der DE-B-2 102 922 ein unsichtbares Strahlenbündel mit fotoelektrischer Einrichtung hervor.

Der Erfinder erkannte, dass die bekannten Systeme nachteilig sind in Bezug auf die folgenden Punkte:
a) Eine manuelle oder elektrische Fokussierung ist langsam und lenkt den Betrachter von seiner eigentlichen Aufgabe und Tätigkeit ab.
b) Ein Autofokus-System fokussiert auf einen bestimmten, vorgewählten Bereich (x0,y0), welcher - manuell oder elektrisch angesteuert - gezielt verändert werden muss.
c) "Eye Tracking": Entsprechende Einrichtungen sind technisch aufwändig und benötigen Zusatzeinrichtungen zum Vermessen des Anwender-Auges. Assistenten, die über einen Ausspiegelungs-Strahlengang beobachten, unterliegen in ihrer Betrachtung der Blickrichtung des Haupt-Beobachters.
d) Alle bekannten Verfahren ignorieren den Einsatz von Instrumenten durch den Anwender beziehungsweise werden dadurch unter Umständen gestört.

Der Erfindung liegt somit die Aufgabe zu Grunde, eine Verbesserung zu finden, welche die angegebenen Nachteile vermeidet, anwenderfreundlich ist und die Anwendung eines Instrumentes störungsfrei berücksichtigt.

Gelöst wird diese Aufgabe durch das folgende Verfahren:

Bildet man z.B. den Operationssitus auf einem Bildsensor ab, so wird - gemäß einer ersten Ausführungsform - über die Auswertung der Änderung des Bildinhaltes mittels eines Rechners ein 2-dimensionales Histogramm erstellt, aus dem eine bestimmte Bewegungsaktivität, beispielsweise das Bewegungs-Maximum, in Form von x0-, y0 -Koordinaten ermittelt wird. Diese Koordinaten führen über das eingesetzte Messverfahren zum Abstand z1 zwischen optischem System und dem ermittelten definierten Objektfeld bzw. Objektpunkt.

Durch die Erfindung und deren Weiterentwicklungen ergeben sich folgende Vorteile:
A) Eine Bestimmung der x0-, y0-Koordinaten mit bestimmter (stärkster) Änderung des Objektes bzw. bestimmter (stärkster) detektierbarer Bewegung im Objektfeld:
   - Sie ermöglicht eine Fokussierung auf vorgegebene (maximale) Veränderungswerte des Objektes - beispielsweise eine Bewegung chirurgischer Instrumente oder auch Vorgänge am Objekt selbst - und damit eine Fokussierung auf den Ort des Geschehens, unabhängig von der Blickrichtung der Augen des (Haupt-)Anwenders. Assistenten sehen somit immer am entscheidenden Ort scharf.
B) Eine selbsttätige Ermittlung und Einstellung der Distanz Objektebene /optisches System:
   - Es sind weder eine manuelle Justierung in X-, Y-Richtung, noch in Z-Richtung notwendig.
   - Es wird automatisch auf den gewünschten oder wichtigsten Betrachtungspunkt fokussiert, und zwar unabhängig von "störenden" Umgebungsbedingungen, wie Augenpupillenentfernung vom Okular, tatsächliche Blickrichtung, etc.
C) Eine Weiterentwicklungsfähigkeit durch Programmierung bzw. Programmänderung:
   - Nicht nur stärkste Änderungen können erfasst werden, sondern auch vorgegebene Änderungs-Bereiche.
D) Die Augen werden nicht vermessen:
   - Zusätzliche Reize auf die Netzhaut - z.B. Infrarot-Beleuchtung - werden vermieden.
   - Das System kann auch bei "remote"-wirkenden optischen Geräten eingesetzt werden, bei denen bestimmte andere Möglichkeiten zur Autofokussierung entfallen (blickrichtungs-orientierte Systeme).
E) Es entfällt eine aufwändige Vermessungsoptik:
   - Gelöst wird das Detektionsproblem hauptsächlich durch Software unter Ausnützung der bereits vorhandenen Rechner und Vorrichtungen (Kamera); dadurch ergibt sich eine kleinere Bauform.
   - Das System kann vielseitig eingesetzt werden.
F) Unterteilung nach Objektfeldern bestimmter einstellbarer Größe:
   - Eine Segmentierung des Objektfeldes mit der Möglichkeit der Gewichtung der gemessenen Bewegungsaktivität und dadurch auch der Systemempfindlichkeit.
G) Eine spezielle Suche nach besonderen Reflexen:
   - Dies erlaubt die Auftrennung der detektierten Bewegungsaktivitäten nach Aktivitäten des Situs oder nach Aktivitäten des chirurgischen Instrumentes, z.B. eines Skalpells. Dadurch wird es beispielsweise möglich, die Fokussierung durch ein Zeigeinstrument gezielt zu steuern.
H) Bildänderungsdetektion aufgelöst nach Pixeln:
   - Erlaubt einfache Detektion mit relativ geringem Rechneraufwand; erlaubt punktgenaue Detektion und daher punktorientierte z-Berechnung.
J) Eine manuelle Grobfokussierung vor dem Bewegungs-Auswerte-Lauf:
   - Erlaubt ein rasches und genaues Auswerten, da alle entscheidenden Teile des Objektes relativ scharf gesehen werden und daher relativ gut auf dem Bildsensor der Kamera abgebildet werden.

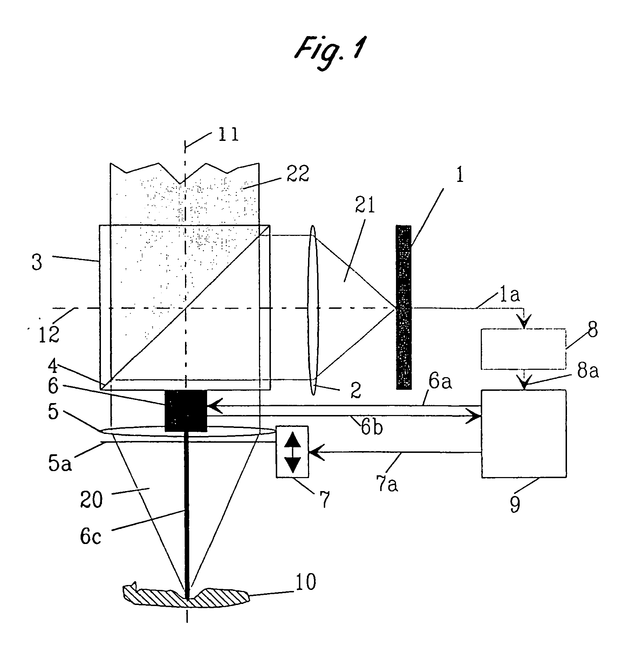

Die Figuren werden übergreifend beschrieben. Gleiche Bezugszeichen bedeuten gleiche Bauteile. Die Figur 1 zeigt einen beispielhaften Aufbau einer erfindungsgemäßen Bildsensor-Analyseeinheit 8 und einen Bildsensor 1, beispielsweise ein CCD einer Kamera mit einer Abbildungsoptik 2. Die Optik 2 kooperiert mit einem Strahlenteiler 3, der im Strahlengang nach einem Hauptobjektiv 5 eines optischen Gerätes angeordnet ist und das Bild des Objektes 10 einerseits zum Anwender (Okular) und andererseits auf den Bildsensor 1 lenkt. Der Bildsensor stellt das Bild des Objektes 10 der Bildsensor-Analyseeinheit 8 (Rechner) in elektronisch aufgelöster Form 1a zur Weiterbearbeitung zur Verfügung. Dieses Signal wird in der Bildsensor-Analyseeinheit 8 in ein Signal 8a für eine Autofokus-Systemeinheit 9 umgewandelt. Die Autofokus-Systemeinheit 9 steuert - basierend auf den Entfernungs-Signalen 6a und 6b - eine Fokussiereinrichtung 7 an und regelt die Position des Objektives 5.

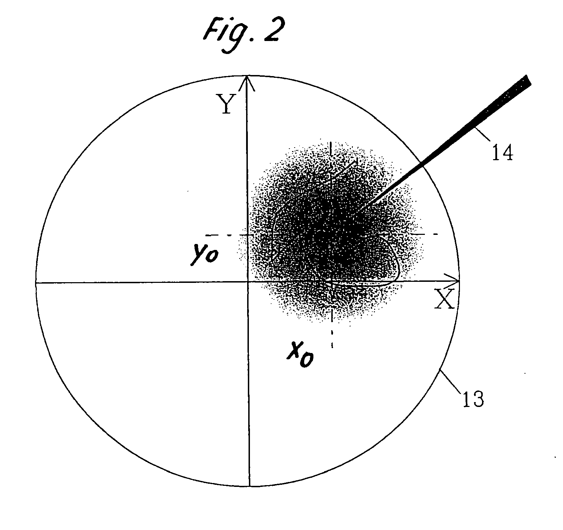

Figur 2 zeigt das Bild eines Objektes, wie es sich beispielsweise beim Blick durch das Okular eines Mikroskops darstellt. So wird es auch am Bildsensor 1 abgebildet. Ein chirurgisches Instrument 14 vollführt am Objekt 10 Tätigkeiten, die zu einer Lageveränderung der Instrumentenspitze führen. Dieser Bewegungsablauf wird symbolisch durch die Kurve dargestellt.

Figur 3 zeigt die Auswertung der Häufigkeit von Bewegungen der Instrumenten-Spitze in Form eines Histogrammes. Die Histogramm-Koordinaten X, Y entsprechen den Objekt-Koordinaten X, Y; die Z-Achse des Histogrammes entspricht der Häufigkeit der Bewegungen im jeweiligen Bildfeld.

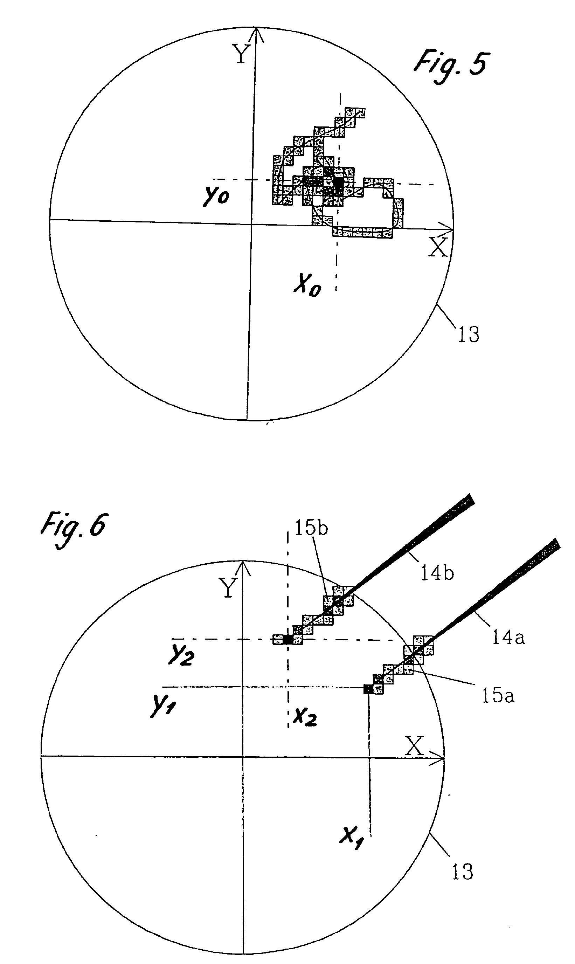

Figur 4 zeigt das Histogramm in 2-dimensionaler Form.

Figur 5 zeigt die Häufigkeit von Änderungen über das Objekt X, Y. Häufige Änderungen sind als dunkle Histogramm-Pixel dargestellt.

Figur 6 zeigt einen Aufbau, bei dem Instrumente 14a bzw. 14b als Zeigeinstrumente verwendet werden und die sich durch sie nacheinander detektierten Bewegungsaktivitäten 15a bzw. 15b. Damit kann auf die entsprechenden Stellen fokussiert werden.

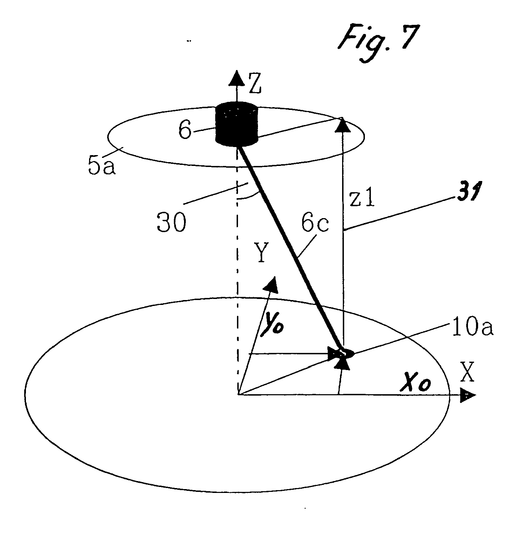

Figur 7 erläutert die Geometrie der Objektkoordinaten. Ein Objektpunkt 10a besitzt eine Koordinate (x0,y0,z0) im Objektraum. Die Koordinaten x0 und y0 wurden auf Grund der Videoanalyse ermittelt. Mittels Entfernungsmessung - z.B. durch einfache Triangulation - kann die effektive Distanz z1 zur Referenzebene 5a des Hauptobjektives 5 ermittelt werden.

Die Funktionsweise ist folgende:

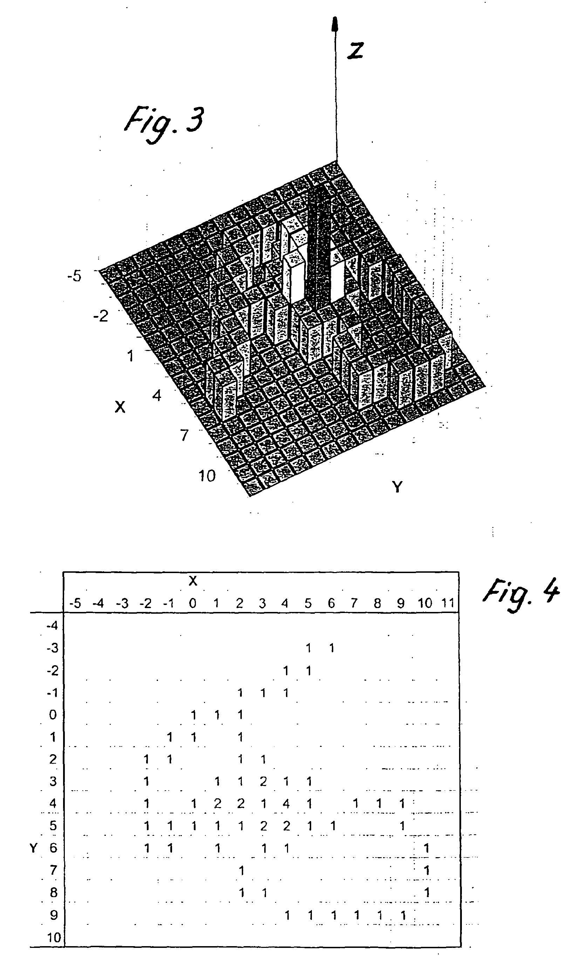

Ein Teil des von einem zu betrachtenden Objekt 10 ausgehenden Strahlenbündels 20 wird mittels eines Strahlenteilers 3 über eine Optik 2 auf einen Bildsensor 1, beispielsweise das CCD einer Kamera, abgebildet. Der Bildsensor stellt somit das Bild des Objektes 10 in elektronisch aufgelöster Form einer Bildsensor-Analyseeinheit (Rechner) 8 zur Verfügung. Dieser Rechner 8 stellt mittels geeigneter Programme intern die Häufigkeit von Bewegungen (Bildänderungen) an bestimmten Bildstellen in Form eines Histogrammes (Figur 3) dar.

Die X-, Y-Ebene des 2½-D-Histogrammes entspricht den Objekt-Koordinaten X, Y. Die Z-Achse des Histogrammes stellt die Häufigkeit von Bewegungen in einem bestimmten Punkt der X-, Y-Ebene dar. Erfindungsgemäß wird ein bestimmter Z-Bereich des Histogrammes, beispielsweise das Maximum, rechnerisch ermittelt und die dazugehörigen Koordinaten (x0,y0) berechnet.

Diese ermittelten Koordinaten werden an eine Autofokus-Systemeinheit 9 weitergegeben. Die Autofokus-Systemeinheit 9 stellt - beispielsweise über einen Messstrahl 6c - die Distanz zu diesem Objektpunkt 10a (x0,y0,z0) fest. Mittels einfacher Triangulation kann die effektive Distanz z1 zwischen dem Objektpunkt (x0,y0,z0) und dem Hauptobjektiv 5 ermittelt werden. Auf Grund dieser Ermittlung wird mittels der Fokussier-Einheit 7 das Hauptobjektiv 5 in diejenige Lage gebracht, dass der Objektpunkt (x0,y0) für den Betrachter scharf abgebildet wird.

Die Erfindung ist dabei aber nicht eingeschränkt auf ein Verfahren mit einem Messstrahl 6c. Die definitive Bestimmung der Fokusdistanz z1 zum entsprechenden Messpunkt (x0,y0,z0) kann auch durch andere herkömmliche Verfahren ermittelt werden, wie z.B. Schnittbild, Randschärfenanalyse, etc.

### Bezugsziffernliste

- 1: Bildsensor (CCD)
- 1a: elektrisches Signal (Videosignal)
- 2: Optik für Bildsensor
- 3: Strahlenteiler
- 4: Strahlenteilerschicht
- 5: Objektiv
- 5a: Referenzebene Objektiv
- 6: Entfernungsmesser
- 6a: Signal: zu messende Position X, Y
- 6b: Signal: Entfernung Z am Ort X, Y
- 6c: Messstrahl
- 7: Fokussiereinrichtung
- 7a: Signal: einzustellende Distanz Z
- 8: Bildsensor-Analyseeinheit (Rechner)
- 8a: Signal: zur Autofokus-Systemeinheit
- 9: Autofokus-Systemeinheit
- 10: Objekt
- 10a: Objektpunkt / -detail
- 11: optische Achse von (5)
- 12: optische Achse von (1)
- 13: Bildfeld
- 14: bewegliches Objekt / Instrument
- 14a: erste Position des Instruments (x1,y1)
- 14b: zweite Position des Instruments (x2, y2)
- 15: Histogramm
- 15a: Histogramm des Instruments: erste Position
- 15b: Histogramm des Instruments: zweite Position
- 20: Strahlengang von (5)
- 21: Strahlengang von (1)
- 22: Strahlengang zum Betrachter
- 30: Winkel zwischen optischer Achse / Objekttrajektorie
- 31: Abstand zwischen Objektiv / Objekt (z1)
- X,Y,Z: Koordinatenachsen
- z1: Distanz

## Patentansprüche

1. Verfahren zum Fokussieren des Objektivs eines Operationsmikroskops auf ein Objekt unter Ausnützung der über einen Bildsensor gewonnenen Bildinformation vom Objekt, **dadurch gekennzeichnet, dass**
- das Objekt (10) nach Objektfeldem (xi, yi) mit wahrnehmbaren Bildänderungen über einen Bildsensor(1) in Pixel aufgelöst und ein pro Pixel erzeugtes elektrisches Signal (1a) untersucht oder unterteilt wird,
- worauf ermittelt wird, welches der Objektfelder (x0, y0) eine bestimmte Änderungsaktivität, beispielsweise die höchste, aufweist,
- worauf der z1-Abstand zwischen dem Objektiv (5) und dem Objektfeld (x0, y0) mit der vorgehend bestimmten Änderungsaktivität berechnet wird,
- worauf dieser Wert zur rechnergestützten Ansteuerung einer Fokussiereinrichtung des Objektivs (5) auf das ermittelte Objektfeld benutzt wird.
- so dass das Objektiv in diejenige Lage gebracht wird, dass das Objektfeld für den Betrachter scharf abgebildet wird.

2. Verfahren nach Anspruch 1, **dadurch gekennzeichnet, dass** die optisch erkennbaren objektseitigen Änderungen im Bild erfasst und nach Helligkeit sowie nach Auftreten von Reflexen gewichtet werden.

3. Verfahren nach einem der vorhergehenden Ansprüche, **dadurch gekennzeichnet, dass** die Bildkoordinaten mit vorgegebenen Veränderungswerten - beispielsweise der häufigsten Änderung pro Zeiteinheit - bestimmt und rechnerisch gewichtet werden.

4. Verfahren nach einem der vorhergehenden Ansprüche, **dadurch gekennzeichnet, dass** die Fokussierung auf Grund vorprogrammierter Gewichtungswerte auf die Stelle mit den entsprechenden objektseitigen Änderungen vorgenommen wird.

5. Verfahren nach einem der vorhergehenden Ansprüche, **dadurch gekennzeichnet, dass** die Änderungen aller elektrischen Signale des Bildsensors (1) erfasst und rechnerisch in einem virtuellen Histogramm (15) dargestellt werden, wobei die X-, Y-Ebene des Histogrammes (15) der Ebene des Bildsensors (1) und die Z-Achse des Histogrammes (15) den Änderungen der Signale entspricht.

6. Verfahren nach einem der vorhergehenden Ansprüche, **dadurch gekennzeichnet, dass** ein bestimmter Z-Bereich des Histogrammes (15) - beispielsweise das Maximum - festgelegt und der dazugehörige Punkt in der X-, Y-Ebene des Histogrammes (15) sowie die entsprechende Position (x0,y0) des Objektes (10) bestimmt und auf die Position (x0, y0) fokussiert wird.

7. Verfahren nach einem der vorhergehenden Ansprüche, **dadurch gekennzeichnet, dass** das Erfassen der Änderungen bzw. Bewegungen rechnergestützt nach voreinstellbaren Parametern erfolgt und vor diesem rechnergestützten Erfassen eine manuelle Fokussierung nach herkömmlichen Gesichtspunkten durchgeführt wird.

8. Vorrichtung zum Fokussieren eines optischen Systems mit einem ferngesteuerten Stellglied für ein verstellbares Objektiv, mit einem Bildsensor und einer Bildsensor-Analyseeinheit, **dadurch gekennzeichnet, dass** die Bildsensor-Analyseeinheit (8) einen Rechner (8) mit einem Programm umfasst, das wenigstens einen der in den vorhergehenden Ansprüchen angegebenen Verfahrens durchzuführen geeignet ist.

9. Vorrichtung nach Anspruch 8, **dadurch gekennzeichnet, dass** der Rechner (8) eine Analysevorrichtung zur Bestimmung von Änderungen elektrischer Signale (1a) von Pixeln eines Bildsensors (1) umfasst.

## Claims

1. Method for focussing the objective of a surgical microscope on an object using the image information obtained on the object via an image sensor, **characterized in that**
- the object (10) is resolved into pixels according to object fields (xi, yi) with discernable image changes via an image sensor (1) and an electrical signal (1a) which is generated per pixel is tested or divided,
- whereupon it is determined which of the object fields (x0, y0) has a particular change activity, for example the highest one,
- whereupon the z1-spacing between the objective (5) and the object field (x0, y0) with the previously determined change activity is calculated,
- whereupon this value is used for the computer-based actuation of a focussing device of the objective (5) onto the determined object field,
- such that the objective is brought into that position where the object field is imaged sharply for the observer.

2. Method according to Claim 1, **characterized in that** the visually discernable object-side changes in the image are recorded and are weighted according to brightness and occurrence of reflections.

3. Method according to one of the preceding claims, **characterized in that** the image coordinates are determined and weighted in a computational manner using predetermined change values, for example the most frequent change per time unit.

4. Method according to one of the preceding claims, **characterized in that** the focussing onto the location with the corresponding object-side changes is carried out on the basis of pre-programmed weighting values.

5. Method according to one of the preceding claims, **characterized in that** the changes in all the electrical signals of the image sensor (1) are recorded and are represented in a virtual histogram (15) in a computational manner, wherein the XY-plane of the histogram (15) corresponds to the plane of the image sensor (1) and the Z-axis of the histogram (15) corresponds to the changes in the signals.

6. Method according to one of the preceding claims, **characterized in that** a particular Z-region of the histogram (15) - for example the maximum - is defined and the associated point in the XY-plane of the histrogram (15) and the corresponding position (x0, y0) of the object (10) is determined and focussing onto the position (x0, y0) is carried out.

7. Method according to one of the preceding claims, **characterized in that** the changes and movements are recorded on a computational basis according to presettable parameters and, before these changes and movements are recorded on a computational basis, manual focussing is carried out according to conventional aspects.

8. Apparatus for focussing an optical system having a remotely controlled actuating element for an adjustable objective, having an image sensor and an image sensor analysis unit, **characterized in that** the image sensor analysis unit (8) comprises a computer (8) with a program suitable for carrying out at least one of the methods specified in the preceding claims.

9. Apparatus according to Claim 8, **characterized in that** the computer (8) comprises an analysis apparatus for determining changes in electrical signals (1a) from pixels of an image sensor (1).

## Revendications

1. Procédé pour la focalisation de l'objectif d'un microscope d'opération sur un objet en utilisant les informations de l'image de l'objet captées à l'aide d'un capteur d'images, **caractérisé en ce que**
- dans les champs de l'objet (xi, yi) présentant des modifications discernables de l'image, l'objet (10) est décomposé en pixels à l'aide d'un capteur d'images (1) et un signal électrique (1a) généré par chaque pixel est analysé ou subdivisé,
- on détermine ensuite lequel des champs d'objets (x0, y0) présente une activité de modification définie, par exemple la plus élevée,
- on calcule ensuite la distance z1 entre l'objectif (5) et le champ de l'objet (x0, y0) ayant l'activité de modification définie précédemment,
- on utilise ensuite cette valeur pour la commande assistée par ordinateur d'un dispositif de focalisation de l'objectif (5) sur le champ déterminé de l'objet,
- de manière à amener l'objectif dans la position permettant de représenter le champ de l'objet de manière nette pour l'observateur.

2. Procédé selon la revendication 1, **caractérisé en ce que** les modifications optiquement discernables dans l'image du côté de l'objet sont enregistrées et pondérées en fonction de la clarté ainsi qu'en fonction de l'apparition de réflexes.

3. Procédé selon une des revendications précédentes, **caractérisé en ce que** les coordonnées de l'image sont déterminées et pondérées par calcul avec les valeurs de modifications déterminées, par exemple de la modification la plus fréquente par unité de temps.

4. Procédé selon une des revendications précédentes, **caractérisé en ce que** la focalisation est effectuée sur l'emplacement présentant les modifications correspondantes du côté de l'objet en se basant sur des valeurs de pondération préprogrammées.

5. Procédé selon une des revendications précédentes, **caractérisé en ce que** les modifications de tous les signaux électriques du capteur d'images (1) sont enregistrées et représentées par calcul dans un histogramme virtuel (15), le plan X-Y de l'histogramme (15) correspondant au plan du capteur d'images (1) et l'axe Z de l'histogramme (15) correspondant aux modifications des signaux.

6. Procédé selon une des revendications précédentes, **caractérisé en ce qu'**on détermine une certaine plage de Z de l'histogramme (15), par exemple le maximum, et qu'on définit le point afférant dans le plan X-Y de l'histogramme (15) ainsi que la position correspondante (x0, y0) de l'objet (10) et on focalise sur la position (x0, y0).

7. Procédé selon une des revendications précédentes, **caractérisé en ce que** l'enregistrement des modifications, respectivement des mouvements, est assisté par ordinateur en fonction de paramètres préréglables, et **en ce qu'**on effectue une focalisation manuelle selon des points de vue habituels avant cet enregistrement assisté par ordinateur.

8. Dispositif pour la focalisation d'un système optique avec un élément de réglage télécommandé pour un objectif réglable, avec un capteur d'images (8) et une unité d'analyse du capteur d'images, **caractérisé en ce que** l'unité d'analyse du capteur d'images (8) comporte un ordinateur avec un programme susceptible d'exécuter au moins un des procédés indiqués dans les revendications précédentes.

9. Dispositif selon la revendication 8, **caractérisé en ce que** l'ordinateur (8) comporte un dispositif d'analyse pour définir des modifications des signaux électriques (1a) de pixels d'un capteur d'images (1).
